# EUROPÄISCHE PATENTSCHRIFT

(11) **EP 3 301 036 B1**
(45) Veröffentlichungstag und Bekanntmachung des Hinweises auf die Patenterteilung: **15.05.2019**
(21) Anmeldenummer: 17188225.1
(22) Anmeldetag: 29.08.2017
(51) Int. Cl.: B65D 35/10

(54) **TUBE UND TUBENKÖPER MIT EINER ELEKTRONISCHEN VORRICHTUNG**
TUBE AND TUBE BODY WITH AN ELECTRONIC DEVICE
TUBE ET CORPS DE TUBE DOTÉS D'UN DISPOSITIF ÉLECTRONIQUE

(30) Priorität: 30.09.2016 CH 12992016
(43) Veröffentlichungstag der Anmeldung: 04.04.2018
(73) Patentinhaber: Hoffmann Neopac AG, 3602 Thun (CH)
(72) Erfinder: GEIGER, Andreas, 3627 Heimberg (CH)
(74) Vertreter: Gachnang, Hans Rudolf

(56) Entgegenhaltungen:
- WO-A1-2010/135843
- WO-A2-2005/097604
- DE-A1-102011 101 260
- GB-A- 559 277

## Beschreibung

Die Erfindung betrifft einen Tubenkörper mit einer elektronischen Vorrichtung gemäss dem Oberbegriff des Patentanspruchs 1 sowie ein Verfahren zur Herstellung eines Tubenkörpers gemäss dem Oberbegriff des Patentanspruchs 10.

Tuben dienen in der Regel zum Aufbewahren und Ausgeben von flüssigen oder pastösen Medien in unterschiedlichen Anwendungsgebieten. Dazu gehören insbesondere die Bereiche Lebensmittel, Pharma, Medizinaltechnik und Kosmetika.

Verschiedene Parameter wie z.B. Grösse, Form, verwendete Materialien und Herstellungstechniken, Aufbau des Tubenkörpers, der Tubenschulter mit der Tubenöffnung und des Verschlusses, insbesondere die Integration von Schutzschichten, Gestalt und Funktion, Dekor, Aufdrucke, Informationen zum Inhalt usw. können entsprechend der jeweiligen Anforderungen in unterschiedlichster Weise vorgegeben werden.

Bei Produkten, die beschränkt und/oder nur unter gewissen Umgebungsbedingungen haltbar sind, beispielswiese bei Lebensmitteln, medizinischen, pharmazeutischen oder kosmetischen Produkten, ist die Angabe entsprechender Informationen an der Tube wichtig. So ist es beispielsweise bekannt, ein Verfalldatum oder eine Chargennummer auf die Aussenseite des Tubenkörpers aufzudrucken oder in die Siegelnaht am hinteren Ende des Tubenkörpers einzuprägen. Der Platz für solche Informationen, die erst beim Befüllen der Tube appliziert werden, ist in der Regel sehr gering. Deshalb können nur wenige Informationen auf diese Weise an der Tube angebracht werden.

Weitere Informationen wie z.B. Angaben zum Inhalt der Tube oder zu dessen Lagerung oder Verwendung oder zu möglichen Gefahren können beispielsweise auf einer von aussen sichtbaren Dekorschicht des Tubenkörpers angegeben werden. Auch dafür ist der verfügbare Platz in der Regel zu klein. Wichtige Informationen werden deshalb üblicherweise auf Packungsbeilagen angegeben. Dies ist nur möglich, wenn die Tuben in zusätzlichen Verpackungen vertrieben werden. Packungsbeilagen sind zudem oft in vielen Sprachen abgefasst und mit sehr kleinen, kaum noch lesbaren Schriften gedruckt. Sie können auch verloren gehen, wenn sie nicht zusammen mit den Tuben aufbewahrt werden.

Üblicherweise umfassen Tuben eine Originalitätssicherung, die beim erstmaligen Öffnen des Verschlusses irreversibel zerstört oder verändert wird.

Hingegen kann ein Nutzer der Tube nicht erkennen, ob es sich dabei um ein Original oder um eine täuschend ähnliche Fälschung handelt. Es ist auch nicht erkennbar, ob die Tube fachgerecht gelagert und/oder transportiert worden ist.

Es ist bekannt, bei der Herstellung von Tuben die Tubenkörper aus einem Flachmaterial zu fertigen, welches mindestens eine Schicht aus einem Kunststoff wie z.B. Polyethylen (PE) oder Polypropylen (PP) umfasst. Dieses Flachmaterial kann eine Barriereschicht bzw. Sperrschicht umfassen, beispielsweise eine dünne Schicht aus elektrisch leitendem Aluminium (Al) oder aus elektrisch nicht leitendem Siliziumoxid (SiO₂) oder Aluminiumoxid (Al₂O₃) oder einem Ethylen-Vinylalkohol-Copolymer (EVOH). Die Barriereschicht kann beispielsweise einseitig oder beidseitig mit einer oder mehreren Kunststoffschichten überdeckt sein.

Bei der Herstellung von Tuben wird das Flachmaterial in der Regel als Bandware von einer Vorratsrolle abgezogen und zu einem flexiblen Schlauch geformt, wobei die aneinander anstossenden oder sich gegenseitig überlappenden Längskanten zum Beispiel durch Schweissen oder Kleben miteinander verbunden werden, sodass eine dichte Naht entsteht. Die Barriereschicht verhindert bzw. minimiert die Diffusion bzw. den Durchtritt insbesondere von Sauerstoff und Wasserdampf durch das Flachmaterial. Zum Herstellen einer Tube wird ein Schlauchabschnitt der gewünschten Länge beispielsweise durch Schweissen, Kleben oder durch Anspritzen mit einer Tubenschulter verbunden, wobei die Tubenschulter als Formteil in Spritzgiesstechnik hergestellt ist.

Aus der DE 10 2011 101 260 ist eine Tube dieser Art bekannt, wobei die Innenfläche der Tubenschulter ebenfalls mit einer Sperrschicht versehen ist. Diese Sperrschicht schliesst dicht an die Barriereschicht des Tubenkörpers an. Das durchgehende Aufbringen der Sperrschicht auf die gesamte Innenfläche der Tubenschulter kann z.B. durch Aufdampfen, Sputtern oder elektrisches und/oder chemisches Abscheiden erfolgen und ist vergleichsweise aufwändig und teuer.

Aus der DE 10 2011 101 260 ist es im Weiteren bekannt, einen Schaltkreis mit RFID-Funktion (Radio Frequency Identification) und eine zugehörige Antennenstruktur in das mehrschichtige Flachmaterial zu integrieren. Die Herstellung solcher Flachmaterialien ist vergleichsweise aufwändig und kompliziert. Hohe Temperaturen und Anpresskräfte, wie sie beim Laminieren vorkommen, können beispielsweise einen Chip beschädigen oder zerstören, wenn dieser nicht in geeigneter Weise geschützt ist. Alternativ schlägt die DE 10 2011 101 260 vor, einen Schaltkreis mit RFID an der Wandung des Tubenkörpers anzubringen, also an dessen Aussenseite. Der Schaltkreis ist somit aussen an der Tube sichtbar und zudem nicht vor Beschädigungen geschützt.

Bei diesen Ausführungsformen darf keine der Schichten des für den Tubenkörper verwendeten Flachmaterials elektrisch leitend sein, da sonst die Übertragung von Energie und/oder Informationen über die Antenne des RFID-Schaltkreises nicht funktionieren würde.

Aus der US 2012/0204991 ist eine weitere Tube bekannt, bei der eine RFID-Komponente in die Tubenschulter integriert ist. Der Tubenkörper kann z.B. in einem nachfolgenden Spritzgiessvorgang an der Tubenschulter angeformt werden. Der RFID-Schaltkreis muss bei der Herstellung der Tubenschulter in eine Spritzgiessform eingebracht, positioniert und mit Kunststoff umspritzt werden. Dies ist vergleichsweise aufwändig und teuer. Hohe Drücke und Temperaturen während des Spritzgiessvorgangs können den Chip und/oder damit verbundene Antennenstrukturen zerstören oder deren Lage unkontrolliert verändern. Im Weiteren ist die nutzbare Fläche der Tubenschulter relativ klein und zudem durch die zentrale Austrittsöffnung unterbrochen. Die engen Platzverhältnisse behindern oder verunmöglichen insbesondere bei kleinen Tuben das Anbringen solcher RFID-Schaltkreise. Da die Energieübertragung bei solchen Schaltkreisen mit passiven Transpondern über deren Antennen erfolgt, besteht die Gefahr, dass bei kleinen Antennen nicht genügend Energie für den Betrieb der Schaltkreise übertragen werden kann und/oder dass nur mit sehr starken elektromagnetischen Feldern bzw. mit sehr nahe bei den Transpondern angeordneten elektromagnetischen Quellen ausreichend Energie zur Verfügung gestellt werden kann. Der Ausgabehals mit der Tubenöffnung und ein die Tubenöffnung verschliessender der Deckel können die Energieübertragung und die Kommunikation mit einem Schreib-/Lesegerät beeinträchtigen. Da Tubenschulter bzw. Tubenköpfe selbst bei Tuben mit gleichen Aussendurchmessern sehr unterschiedlich ausgebildet sein können, müssen die Transponder für die unterschiedlichen Ausführungsformen individuell gestaltet werden. Dies ist aufwändig und teuer.

Eine Aufgabe der vorliegenden Erfindung ist es deshalb, eine einfach herstellbaren Tubenkörper mit einer geschützten integrierten elektronischen Vorrichtung zu schaffen. Eine weitere Aufgabe der Erfindung besteht darin, den Tubenkörper so auszubilden, dass einfach und zuverlässig Information von der elektronischen Vorrichtung abgefragt und/oder an die elektronische Vorrichtung übermittelt werden kann.

Eine weitere Aufgabe der Erfindung besteht darin, ein Verfahren zur Herstellung eines solchen Tubenkörpers anzugeben.

Diese Aufgaben werden gelöst durch einen Tubenkörper gemäss den Merkmalen des Anspruchs 1 und durch ein Verfahren zum Herstellen eines solchen Tubenkörpers gemäss den Merkmalen des Anspruchs 10. Vorteilhafte Weiterbildungen dieses Tubenkörpers sind in den abhängigen Ansprüchen angegeben.

Der Tubenkörper umfasst einen schlauchartigen Tubeninnenkörper. Dieser ist vorzugsweise aus einem Flachmaterial gefertigt, das mindestens eine Kunststoffschicht umfasst. Das Flachmaterial kann insbesondere ein mehrschichtiges Laminat mit einer oder mehreren Barriereschichten sein, die für bestimmte Gase wie z.B. Sauerstoff und Wasserdampf zumindest näherungsweise undurchlässig sind. Eine solche Sperrschicht kann z.B. Aluminium oder EVOH umfassen und beidseitig über Haftvermittler mit einer Polymerschicht, insbesondere mit einer Schicht aus Polyethylen (PE) oder aus Polypropylen (PP) verbunden sein.

Zur Herstellung solcher Tubeninnenkörper werden zwei sich gegenüberliegende Längskanten des Flachmaterials überlappend oder aneinander anstossend miteinander verschweisst oder verklebt, sodass ein Schlauch mit einer dichten Längsnaht gebildet wird. Alternativ könnten zur Herstellung von Tubeninnenkörpern auch extrudierte nahtlose Schläuche verwendet werden, die bei Bedarf innen und/oder aussen zusätzlich mit einer Sperrschicht beschichtet werden können.

Sowohl aus Flachmaterial hergestellte als auch extrudierte Schläuche für Tubeninnenkörper können in bekannter Weise in kontinuierlichen Verfahren hergestellt werden.

Zur Herstellung der erfindungsgemässen Tubenkörper werden an der Aussenseite eines solchen Schlauches für einen Tubeninnenkörper in der Regel in gleichmässigen Abständen elektronische Vorrichtungen fixiert, beispielsweise flache RFID-Etiketten, bei denen ein Transponder, der eine Antenne, insbesondere eine Antennenspule, und einen Chip umfasst, vorzugsweise auf einem selbstklebenden Kunststofffilm als Substrat angeordnet sind. Die gegenseitigen Abstände der elektronischen Vorrichtungen entsprechen der Länge der herzustellen den Tubenkörper bzw. Tubenrümpfe. Anschliessend wird aussen auf den so vorbereiteten Innenschlauch ein nahtloser Mantel aus einem thermoplastischen Kunststoff aufextrudiert. Dieser haftet am Innenschlauch, sodass die elektronische Vorrichtung geschützt zwischen dem Innenschlauch und dem Mantelschlauch angeordnet bzw. eingebettet ist. Durch Ablängen des so gefertigten Verbundschlauches werden Tubenkörper der gewünschten Länge hergestellt, bei denen jeweils eine elektronische Vorrichtung an einer definierten Stelle zwischen den Enden der Schlauchabschnitte angeordnet ist.

Die Antenne des Transponders dient zum berührungslosen Übertragen elektromagnetischer Energie von einem externen Gerät an die elektronische Vorrichtung und somit zur Speisung dieser Vorrichtung und/oder zur unidirektionalen oder bidirektionalen Informationsübertragung zwischen der elektronischen Vorrichtung und einem externen Gerät. Der Chip umfasst ein Speichermedium bzw. einen Speicher, dessen Speicherkapazität entsprechend der jeweiligen Anforderungen festgelegt sein kann. Diese kann von wenigen Byte bis zu mehreren Megabyte betragen. Zumindest ein Teil des Speichers kann dazu ausgebildet sein, nur einmalig mit Informationen zu beschrieben werden, die anschliessend nicht mehr gelöscht werden können. In diesem Bereich kann z.B. ein Identifikationscode gespeichert sein, der z.B. beim Befüllen der Tube von einem Vergabegerät an die elektronische Vorrichtung der Tube übertragen wird. Dieser Identifikationscode kann z.B. eine oder mehrere Sequenzen umfassen, die den Tubeninhalt und/oder eine Chargennummer und/oder das Abfülldatum und/oder ein Verfalldatum und/oder den Hersteller eindeutig identifizieren.

Die geschützte Integration der elektronischen Vorrichtung in den Tubenkörper lässt den grösstmöglichen Gestaltungsspielraum bezüglich Ausgestaltung und Positionierung der elektronischen Vorrichtung an der Tube zu. So steht beispielsweise vergleichsweise viel Platz für Antennen zur Verfügung. Die Elektronik oder Teile davon wie z.B. Antennen, Bedienelemente, Anzeigeelemente, Energiespeicher oder ein Chip können entsprechend ihrer jeweiligen Funktion optimal plaziert werden. So kann z.B. eine Antenne nahe an einer Stelle angeordnet werden, wo von aussen her Energie zugeführt und/oder Informationen übertragen werden sollen. Optionale Anzeigeelemente können an Stellen angeordnet werden, wo sie das Erscheinungsbild der Tube nicht stören und dennoch gut sichtbar sind. Gegebenenfalls vorhandene Bedienelemente, Sensoren und/oder Wandler zum Erzeugen elektrischer Energie können ebenfalls entsprechend ihrer Aufgabe optimal angeordnet werden.

Zum Herstellen einer Tube wird das eine Ende eines Tubenkörpers in an sich bekannter Weise, beispielsweise durch Schweissen oder Kleben, dicht mit einer Tubenschulter verbunden.

Optional können an der Tubenschulter ein oder mehrere elektrisch leitende Abschnitte ausgebildet sein, die beim Verbinden mit dem Tubenkörper elektrisch leitend mit entsprechenden elektrisch leitenden Elementen des Tubenkörpers verbunden werden. Diese wiederum gehören zur elektronischen Vorrichtung des Tubenkörpers.

Wenn zwei solche elektrisch leitenden Abschnitte der Tubenschulter durch eine Originalitätssicherung elektrisch miteinander verbunden sind, kann dies von der elektronischen Vorrichtung des Tubenkörpers festgestellt werden. Die Originalitätssicherung ist so ausgebildet, dass beim erstmaligen Öffnen des Tubenverschlusses die elektrisch leitende Verbindung der Originalitätssicherung vorzugsweise irreversibel unterbrochen wird. Die elektronische Vorrichtung erkennt, wenn die Verbindung unterbrochen ist und kann entsprechende Informationen in einem Speichermedium speichern.

Nach dem Befüllen des Tubeninnenraums mit dem gewünschten Tubeninhalt durch das noch offene hintere Ende des Tubenkörpers in einer Tubenfüllanlage wird das hintere Ende des Tubenkörpers in bekannter Weise versiegelt.

Vor, während oder nach dem Befüllen der Tube kann ein Speicher des Transponders in einer Schreib-/Lesestation mit Daten beschrieben werden, die für das jeweilige Produkt relevant sind. Solche Daten können beispielsweise eine oder mehrere der folgenden Informationen umfassen: Eindeutiger Identifikationscode, der von der Schreib-/Lesestation jede Tube oder für jede Charge einmalig bzw. individuell vergeben wird, Hersteller Code, Produktcode, Herstelldatum, Verfalldatum, Produktbezeichnung, Produktzusammensetzung bzw. Inhaltsstoffe, Warnungen, Anwendungshinweise, Links zu einer oder mehreren Internetseiten mit weiterführenden Informationen.

Das Speichermedium der elektronischen Vorrichtung oder ein Teil dieses Speichermediums kann so ausgebildet sein, dass die nach der erstmaligen Beschreibung darin gespeicherte Information nicht mehr gelöscht oder überschrieben werden kann. Dies hat den Vorteil, dass solche Informationen nachträglich nicht manipuliert werden können. Kann das Speichermedium oder ein Teil des Speichermediums dazu ausgebildet sein, Informationen verschlüsselt zu speichern.

Vorzugsweise ist zumindest ein Teil des Speichermediums so eingerichtet, dass darin auch nach dem erstmaligen Speichern von Informationen beim Befüllen der Tube weitere Daten gespeichert und wieder abgerufen werden können. Solche weiteren Daten können beispielsweise von der elektronischen Vorrichtung selbst bereitgestellt und/oder von einem externen Gerät an die elektronische Vorrichtung übermittelt werden. So kann die elektronische Vorrichtung beispielsweise einen oder mehrere integrierte Sensoren zum Erfassen von Messgrössen wie zum Beispiel der Temperatur oder der Helligkeit umfassen. Eine Verarbeitungseinheit der elektronischen Vorrichtung kann zum Beispiel dazu ausgebildet sein, solche Messgrössen periodisch oder nach anderen vorgegebenen Kriterien zu erfassen und analog zu einem Datenlogger im Speichermedium zu speichern. Alternativ können zum Beispiel für eine oder mehrere der Messgrössen Vergleichswerte gespeichert sein. Wenn eine der Messgrössen einen zugehörigen Vergleichswert überschreitet oder unterschreitet, kann im Speichermedium eine entsprechende Information gespeichert werden.

Die elektronische Vorrichtung ist dazu optimiert, nur ein Minimum an Energie zu verbrauchen. Sie kann Mittel umfassen, mit denen Teile ausgeschaltet oder in einen Zustand mit minimalem Energieverbrauch versetzt werden können, wenn sie nicht gebraucht werden. Zur Sicherstellung einer ausreichenden Energieversorgung kann die elektronische Vorrichtung einen Energiespeicher, beispielsweise eine Dünnfilmbatterie umfassen. Alternativ oder zusätzlich kann der Energiespeicher auch eine wiederaufladbare Kapazität zur Energiespeicherung umfassen. Bei einem passiven Transponder kann eine solche Kapazität beispielsweise Energie speichern, die von einer elektromagnetischen Energiequelle ausserhalb der Tube über entsprechende Antennen des Transponders aufgenommen wird. Zusätzlich oder alternativ kann die elektronische Vorrichtung auch andere Mittel umfassen, mit denen von aussen zugeführte Energie in elektrische Energie umgewandelt werden kann. Ein Beispiel hierfür sind Dünnschichtsolarzellen, welche, wenn sie von einem transparenten oder opaken Bereich des Tubenmantels überdeckt sind, durchscheinendes Licht in elektrische Energie umwandeln können. Ein weiteres Beispiel sind piezoelektrische Filme, welche auf die Tube ausgeübte Druck- und/oder Zugkräfte oder Beschleunigungen, wie sie beim Schütteln der Tube auftreten, in elektrische Energie umwandeln. Wenn eine Person von aussen Druck auf die Tube ausübt oder die Tube schüttelt, kann so genügend Energie erzeugt werden, um eine im Speichermedium gespeicherte Information, beispielsweise den Zustand eines oder mehrerer Statusbits, mit einem optionalen Anzeigemittel der elektronischen Vorrichtung anzuzeigen. Ein solches Anzeigemittel kann z.B. eine Folienleuchtdiode oder mehrere Folien-Leuchtdioden mit gleicher oder vorzugsweise unterschiedlicher Farbe umfassen.

Im Speichermedium der elektronischen Vorrichtung sind vorzugsweise Verarbeitungsvorschriften zum Überwachen bestimmter Parameter und zum Setzen oder Löschen eines oder mehrerer Statusbits gespeichert. Ein Statusbit kann z.B. zum Anzeigen unzulässiger Bedingungen genutzt werden. Dieses Statusbit kann beispielsweise gesetzt werden, wenn die von einem integrierten Temperatursensor gemessene Temperatur eine oder mehrere vorgegebene Grenztemperaturen überschreitet bzw. unterschreitet. Das gleiche oder ein anderes Statusbit kann in analoger Weise in Abhängigkeit weiterer Messgrössen gesetzt oder gelöscht werden. Als weitere Messgrösse kann insbesondere eine zeitliche Messgrösse erfasst werden. Die elektronische Vorrichtung kann beispielsweise einen Taktgeber umfassen, der einen Zähler oder einen Timer taktet, oder eine integrierte Uhr mit Datum. In beiden Fällen kann durch Vorgabe eines Vergleichswertes für die zeitliche Messgrösse ein Zeitpunkt vorgegeben werden, beispielsweise ein Verfalldatum, um den Zustand des Statusbits zu ändern. Vorzugsweise erfolgt die Änderung des Statusbits irreversibel. Dadurch können spätere Manipulationen durch Unbefugte verhindert werden.

Zum Anzeigen des Zustandes des bzw. der Statusbits kann die elektronische Vorrichtung grundsätzlich die gleichen Mittel nutzen, die auch zum Erzeugen elektrischer Energie verwendet werden. Sobald Energie von aussen zugeführt und in elektrische Energie gewandelt wird, zeigt die Anzeigevorrichtung den Zustand des bzw. der Statusbits an, indem beispielsweise zugehörige Leuchtdioden kurzzeitig rot oder grün leuchten. Rot bedeutet, dass mindestens einer der überwachten Parameter kritisch ist, und dass die Unversehrtheit des Tubeninhalts nicht garantiert ist. Grün signalisiert, dass der Tubeninhalt einwandfrei ist.

Bei weiteren Ausführungsformen kann die elektronische Vorrichtung auch einen Empfänger umfassen, der zum Empfangen externer Zeit- und/oder Positionssignalen ausgebildet ist, beispielsweise einen GPS-Empfänger oder einen Zeitsignalempfänger. Anhand der Signale, die mit solchen Empfängern erfasst werden, kann die elektronische Vorrichtung beispielsweise periodisch den Aufenthaltsort überprüfen und festgestellte Änderungen protokollieren bzw. im Speichermedium die jeweiligen Orts- und Zeitinformationen hinterlegen. Dies ermöglicht eine Rückverfolgbarkeit des jeweiligen Produktes.

Bei Tuben, deren Speichermedium einen frei nutzbaren Speicherbereich umfasst, können in diesem Speichermedium beispielsweise auch individualisierte, z.B. auf eine bestimmte Person bezogene Daten gespeichert werden. Insbesondere können beispielsweise personenbezogene Anwendungsdaten für ein medizinisches oder kosmetisches Produkt im Speicher gespeichert werden. Falls die elektronische Vorrichtung für eine Nahfeldkommunikation (NFC) mit einem Mobiltelefon eingerichtet ist, können dort die entsprechenden Informationen angezeigt werden. Allgemein können im Speicher der elektronischen Vorrichtung ein Link zum Öffnen einer bestimmten App gespeichert werden. Solche Apps können dazu ausgebildet sein, weitere Informationen zum jeweiligen Produkt bereitzustellen, indem sie diese beispielsweise über eine Internetverbindung von entsprechenden Datenbanken abfragen. Vorzugsweise werden dabei weitere Informationen genutzt, die im Speicher der elektronischen Vorrichtung gespeichert sind, beispielsweise Daten, die sich auf das jeweilige Produkt oder auf eine bestimmte Person beziehen. Auf diese Weise können auf der Anzeige des Smartphones gezielt die relevanten Inhalte angezeigt werden.

Die Anordnung erfindungsgemässer Elemente bzw. erfindungsgemäss wirkender Elemente der elektronischen Vorrichtung ist nicht auf die Integration in den Tubenmantel beschränkt. Soweit dies fertigungstechnisch möglich ist, können solche Elemente auch an anderen Stellen der Tube angeordnet sein, beispielsweise in der Tubenschulter.

Anhand einiger Figuren wird die Erfindung im Folgenden näher beschrieben. Dabei zeigen
- Figur 1: eine Tube mit einer elektronischen Vorrichtung
- Figur 2: einen Längsschnitt einer Tube ohne Verschluss im Bereich der Tubenschulter,
- Figur 3: einen Abschnitt eines teilweise aufgeschnittenen Schlauches zur Herstellung eines Tubenkörpers,
- Figur 4: einen Schichtaufbau eines Tubenmantels.

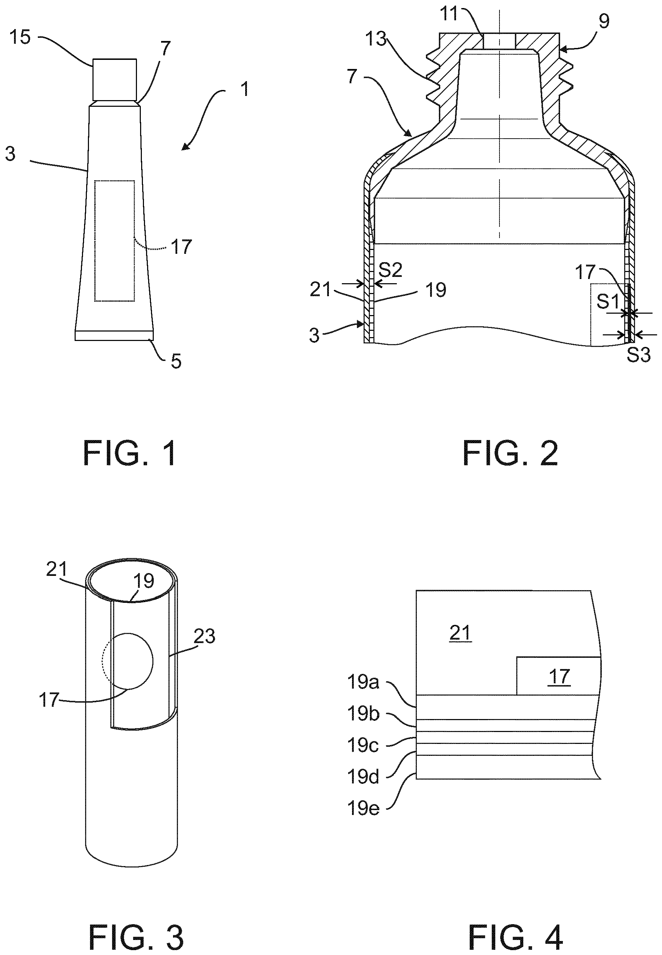

Figur 1 zeigt eine Tube 1, die einen flexiblen, schlauchartigen Tubenkörper 3 umfasst, dessen eines Ende durch eine Siegelnaht 5 verschlossen ist, und dessen gegenüberliegendes Ende dicht mit einer Tubenschulter 7 verbunden ist.

Figur 2 zeigt einen Längsschnitt einer Tube 1 bei abgenommenem Verschlussdeckel 15 im Bereich der Tubenschulter 7.

Die Tubenschulter 7 umfasst einen Tubenkopf 9 mit einer Tubenöffnung 11 und einem Aussengewinde 13. Diese sind bei der Darstellung der Tube in Figur 1 nicht sichtbar, da zum Verschliessen der Tubenöffnung 11 ein Schraubverschluss 15 der Tube auf den Tubenkopf 9 aufgeschraubt ist. Eine in den Tubenkörper 3 integrierte dünne elektronische Vorrichtung 17 ist in Figur 1 schematisch durch eine unterbrochene Linie dargestellt.

Die elektronische Vorrichtung 17 ist vorzugsweise auf einem flexiblen Substrat angeordnet, beispielsweise auf einer selbstklebenden bzw. eine Haftschicht umfassenden Kunststofffolie. Diese wird bei der Herstellung des Tubenkörpers 3 auf einen schlauchartigen Tubeninnenkörper 19 aufgeklebt und anschliessend durch Aufextrudieren eines nahtlosen äusseren Tubenmantels 21 aus Kunststoff in den Tubenkörper 3 eingebettet. Der Tubenmantel 21 kann aus einem nicht transparenten Kunststoff gefertigt oder zumindest lokal mit einer intransparenten Schicht überdeckt sein, beispielsweise mit einer Farbschicht eines Aufdrucks, sodass die im Inneren eingebettete elektronische Vorrichtung 17 oder Teile davon von aussen nicht sichtbar sind. Optional können der Tubenmantel 21 oder Abschnitte des Tubenmantels 21 in analoger Weise auch opak oder transparent ausgebildet sein. Dies ist von Vorteil, wenn die elektronische Vorrichtung 17 Licht erzeugende oder Licht absorbierende Elemente wie z.B. Leuchtdioden oder Dünnfilmsolarzellen umfasst (nicht dargestellt).

Vorzugsweise hat das Substrat der elektronischen Vorrichtung 17 Eigenschaften, die beim Rezyklieren der Tube 1 eine Trennung der elektronischen Vorrichtung 17 vom umgebenden Material erleichtern. Solche Eigenschaften sind beispielsweise eine höhere Schmelztemperatur oder eine höhere Schlagzähigkeit als jene der angrenzenden Materialien des Tubenmantels 21 und des Tubeninnenkörpers 19. Insbesondere können die Elemente der elektronischen Vorrichtung 17 zumindest teilweise in ein solches Substrat eingebettet sein. Die Dicke S1 der elektronischen Vorrichtung 17 ist vorzugsweise kleiner als die Dicke S2 des Tubenkörpers 3 an nicht unmittelbar an die elektronische Vorrichtung 17 angrenzenden Stellen des Tubenkörpers 3. Im Bereich der elektronischen Vorrichtung 17 ist die maximale Gesamtdicke S3 des Tubenkörpers 3 vorzugsweise gleich gross oder nur geringfügig, d.h. weniger als 20% grösser als die Dicke S2 in angrenzenden Bereichen des Tubenkörpers 3. Von Auge ist deshalb kaum wahrnehmbar, dass ein Gegenstand in den Tubenkörper 3 eingebettet ist.

Figur 3 zeigt einen Tubenkörper 3, bei dem ein Abschnitt des Tubenmantels 21 abgetrennt wurde, sodass vom Tubenmantel 21 überdeckte Bereiche der elektronischen Vorrichtung 17 und des Tubeninnenkörpers 19 sichtbar sind. Die elektronische Vorrichtung 17 kann beispielsweise wie in Figur 3 dargestellt, eine kreisförmige RFID-Etikette sein.

Vorzugsweise ist der Tubeninnenkörper 19 analog zu Tubenkörpern herkömmlicher Laminattuben aus einem mehrschichtigen Flachgebilde gefertigt, wobei zwei sich gegenüberliegende Kanten dieses Flachgebildes entlang einer Längsnaht 23 miteinander verbunden sind. Dies ermöglicht es insbesondere, die erfindungsgemässen Tubenkörper 3 und Tuben 1 mit einer Barriereschicht zu versehen.

Figur 4 zeigt beispielhaft einen möglichen Schichtaufbau eines Tubenkörpers 3 einer derartigen Tube 1. Die gesamte Dicke der Tube ist kleiner als 1mm, vorzugsweise kleiner als 0.6mm, beispielsweise 0.5mm oder 0.35mm oder 0.3mm. Der Tubenmantel 21 ist beispielsweise aus Polypropylen (PP) gefertigt. Seine Dicke liegt vorzugsweise im Bereich von einem Viertel bis drei Vierteln der gesamten Dicke des Tubenkörpers 3. Der Tubeninnenkörper 19 umfasst angrenzend an den Tubenmantel 21 und angrenzend an den Tubeninnenraum je eine Kunststoffschicht 19a, 19e, die beispielsweise ebenfalls aus Polypropylen gefertigt sind und eine geringere Dicke als jene des Tubenmantel 21 aufweisen. Zwischen diesen Kunststoffschichten 19a, 19e ist eine Barriereschicht 19c angeordnet, die beispielsweise Aluminium umfasst und vorzugsweise eine Dicke zwischen 10 und 50 Mikrometer, beispielsweise 12, 15 oder 40 Mikrometer. Die Barriereschicht 19c ist beidseitig über je eine Schicht 19b, 19d eines Haftvermittlers mit den beiden äusseren Kunststoffschichten 19a, 19e des Tubeninnenmantels 19 verbunden. Die Schichtdicken des Haftvermittlers liegen in einer ähnlichen Grössenordnung wie die Dicke der Barriereschicht 19c.

Alternativ kann der Tubeninnenkörper 19 auch andere Materialien und/oder Schichtdicken umfassen.

Falls die Barriereschicht 19c ein elektrisch leitendes Material umfasst, kann in dieser Barriereschicht 19c lokal eine Ausnehmung vorgesehen sein, welche im Bereich einer Antenne der elektronischen Vorrichtung 17 angeordnet ist. Dadurch kann die Übertragung von Energie und/oder Informationen zwischen der elektronischen Vorrichtung 17 und einem externen Gerät verbessert werden.

## Patentansprüche

1. Tubenkörper (3) zur Herstellung einer Tube (1), umfassend einen schlauchartigen Tubeninnenkörper (19) und einen Tubenmantel (21), der den Tubeninnenkörper (19) ummantelt, **dadurch gekennzeichnet, dass** der Tubenmantel (21) ein nahtloser aufextrudierter Schlauch ist, und dass zwischen dem Tubeninnenkörper (19) und dem Tubenmantel (21) eine elektronische Vorrichtung (17) mit einem Energiespeicher zum Bereitstellen der für den Betrieb erforderlichen Betriebsspannung angeordnet ist.

2. Tubenkörper (3) nach Anspruch 1, **dadurch gekennzeichnet, dass** eine Tubenschulter (7), die eine Tubenöffnung (11) begrenzt, mit dem Tubenkörper (3) zu einer Tube (1) verbunden ist und gemeinsam mit dem Tubenkörper (3) einen Tubeninnenraum begrenzt.

3. Tubenkörper (3) nach einem der Ansprüche 1 oder 2, **dadurch gekennzeichnet, dass** der Tubeninnenkörper (17) aus einem mehrschichtigen, zu einem schlauchartigen Gebilde umgeformten flexiblen Flachmaterial gefertigt ist, wobei aneinander stossende oder sich überlappende Ränder des Flachmaterials entlang einer Längsnaht (23) miteinander verbunden sind.

4. Tubenkörper (3) nach Anspruch 3, **dadurch gekennzeichnet, dass** das Flachmaterial, aus dem der Tubeninnenkörper (17) gefertigt ist, ein Laminat mit einer Barriereschicht (19c) aus Aluminium oder Kunststoff umfasst.

5. Tubenkörper (3) nach einem der Ansprüche 1 bis 4, **dadurch gekennzeichnet, dass** die elektronische Vorrichtung (17) einen Transponder und ein Speichermedium umfasst.

6. Tubenkörper (3) nach einem der Ansprüche 1 bis 5, **dadurch gekennzeichnet, dass** der Energiespeicher eine wiederaufladbare Kapazität und/oder eine Dünnfilmbatterie umfasst.

7. Tubenkörper (3) nach einem der Ansprüche 1 bis 6, **dadurch gekennzeichnet, dass** die elektronische Vorrichtung (17) einen Energiewandler umfasst, der zum Wandeln von aussen zugeführter Energie in von der elektronischen Vorrichtung (17) nutzbare elektrische Energie ausgebildet ist.

8. Tubenkörper (3) nach einem der Ansprüche 1 bis 7, **dadurch gekennzeichnet, dass** die elektronische Vorrichtung (17) eines oder mehrere der folgenden Elemente umfasst:
a) eine RFID-Etikette,
b) eine Dünnfilmbatterie und/oder ein kapazitives Element zum Speichern elektrischer Energie,
c) einen GPS-Empfänger,
d) einen Funk-Zeitempfänger,
e) einen Temperatursensor und/oder einen Helligkeitssensor,
f) ein Speichermedium mit einem nicht löschbaren oder nur lesbaren Speicherbereich und/oder mit einem Speicherbereich, in dem Daten wieder löschbar oder überschreibbar gespeichert werden können,
g) ein Anzeigemittel.

9. Tubenkörper (3) nach einem der Ansprüche 2 bis 7, **dadurch gekennzeichnet, dass** die elektronische Vorrichtung (17) zwei elektrisch leitende Elemente umfasst, die über eine an der Tubenschulter (7) angeordnete, durch ein Element einer Originalitätssicherung unterbrechbare elektrische Verbindungsleitung miteinander verbunden sind.

10. Verfahren zur Herstellung eines Tubenkörpers (3) nach Anspruch 1, **dadurch gekennzeichnet, dass** ein mindestens eine Kunststoffschicht (19, 19a) umfassender Innenschlauch hergestellt wird, indem
a) ein Flachmaterial, das mindestens eine Schicht (19, 19a) aus Kunststoff umfasst, gebogen wird und zwei Längskanten dieses Flachmaterials entlang einer Längsnaht (19) miteinander verbunden werden, oder
b) eine thermoplastische Kunststoffmasse extrudiert wird,
dass auf der Aussenseite dieses Innenschlauchs eine elektronische Vorrichtung (17) mit einem Energiespeicher zum Bereitstellen der für den Betrieb erforderlichen Betriebsspannung angeordnet wird, dass auf diesen Innenschlauch mit der elektronischen Vorrichtung (17) ein nahtloser äusserer Mantelschlauch aufextrudiert wird, wobei die elektronische Vorrichtung (17) geschützt zwischen dem Innenschlauch und dem Mantelschlauch eingebettet wird, und dass der so gebildete Verbundschlauch entsprechend der erforderlichen Länge des Tubenkörpers (3) abgelängt wird.

## Claims

1. A tube body (3) for producing a tube (1), comprising a hose-type tube interior body (19) and a tube sheath (21) which sheathes the tube interior body (19), **characterized in that** the tube sheath (21) is a seamless extruded hose, and that between the tube interior body (19) and the tube sheath (21), an electronic device (17) is arranged with an energy storage system for providing the operating voltage required for operation.

2. The tube body (3) according to Claim 1, **characterized in that** a tube shoulder (7), which delimits a tube opening (11), is connected with the tube body (3) to a tube (1) and together with the tube body (3) delimits an interior tube space.

3. The tube body (3) according to one of Claims 1 or 2, **characterized in that** the tube interior body (17) is produced from a multi-layer, flexible flat material that is deformed to create a hose-like structure, whereby edges of the flat material that push against each other or overlap are connected to each other along a longitudinal seam (23).

4. The tube body (3) according to Claim 3, **characterized in that** the flat material from which the tube interior body (17) is produced comprises a laminate with a barrier layer (19c) made of aluminium or plastic.

5. The tube body (3) according to any one of Claims 1 to 4, **characterized in that** the electronic device (17) comprises a transponder and a storage medium.

6. The tube body (3) according to any one of Claims 1 to 5, **characterized in that** the energy storage system comprises a re-chargeable capacity and/or a thin-film battery.

7. The tube body (3) according to any one of Claims 1 to 6, **characterized in that** the electronic device (17) comprises an energy converter, which is designed to convert energy fed from outside into electric energy that is usable by the electronic device (17).

8. The tube body (3) according to any one of Claims 1 to 7, **characterized in that** the electronic device (17) comprises one or more of the following components:
a) an RFID tag,
b) a thin-film battery and/or a capacitive element for storing electric energy,
c) a GPS receiver,
d) a radio time receiver,
e) a temperature sensor and/or a brightness sensor,
f) a storage medium with a non-deletable or readable-only storage area and/or with a storage area in which data can be stored such that it is re-deletable or over-writable,
g) a display means.

9. The tube body (3) according to any one of Claims 2 to 7, **characterized in that** the electronic device (17) comprises two electrically conductive elements, which are connected to each other via an electric connection line that is arranged on the tube shoulder (7), which is interruptible by a component of a tamper-evident closure.

10. The method for producing a tube body (3) according to Claim 1, **characterized in that** an inner hose is produced comprising at least one plastic layer (19, 19a), in which
a) a flat material, which comprises at least one layer (19, 19a) made of plastic, is bent and two longitudinal edges of this flat material are connected to each other along a longitudinal seam (19), or
b) a thermoplastic plastic mass is extruded, that on the outer side of this inner hose, an electronic device (17) with an energy storage system for providing the operating voltage required for operation is arranged, that on said inner hose with the electronic device (17), a seamless outer sheath hose is extruded, whereby the electronic device (17) is embedded in a protected manner between the inner hose and the sheath hose, and that the compound hose thus formed is cut to length in accordance with the required length of the tube body (3).

## Revendications

1. Corps de tube (3) destiné à la fabrication d'un tube (1), comprenant un corps intérieur de tube (19) en forme de tuyau et une gaine de tube (21), qui enveloppe le corps intérieur de tube (19), **caractérisé en ce que** la gaine de tube (21) est un tuyau extrudé sans raccord, et **en ce qu'**un dispositif électronique (17) doté d'un accumulateur d'énergie pour fournir la tension de service nécessaire au fonctionnement est disposé entre le corps intérieur de tube (19) et la gaine de tube (21).

2. Corps de tube (3) selon la revendication 1, **caractérisé en ce qu'**un collet de tube (7), qui limite une ouverture de tube (11), est relié au corps de tube (3) pour former un tube (1) et limite conjointement avec le corps de tube (3) un espace intérieur de tube.

3. Corps de tube (3) selon une des revendications 1 ou 2, **caractérisé en ce que** le corps intérieur de tube (17) est fabriqué en un matériau plat flexible transformé en un produit en forme de tuyau, des bords contigus ou se chevauchant du matériau plat étant reliés entre eux le long d'une ligne de joint longitudinale (23).

4. Corps de tube (3) selon la revendication 3, **caractérisé en ce que** le matériau plat, à partir duquel est fabriqué le corps intérieur de tube (17), comprend un produit feuilleté doté d'une couche barrière (19c) en aluminium ou en matière plastique.

5. Corps de tube (3) selon l'une quelconque des revendications 1 à 4, **caractérisé en ce que** le dispositif électronique (17) comprend un transpondeur et un support de stockage.

6. Corps de tube (3) selon l'une quelconque des revendications 1 à 5, **caractérisé en ce que** l'accumulateur d'énergie comprend un condensateur rechargeable et/ou une batterie à couche mince.

7. Corps de tube (3) selon l'une quelconque des revendications 1 à 6, **caractérisé en ce que** le dispositif électronique (17) comprend un convertisseur d'énergie, qui est conçu pour convertir de l'énergie alimentée depuis l'extérieur en énergie électrique utilisable par le dispositif électronique (17).

8. Corps de tube (3) selon l'une quelconque des revendications 1 à 7, **caractérisé en ce que** le dispositif électronique (17) comprend un ou plusieurs des éléments suivants :
a) une étiquette RFID,
b) une batterie à couche mince et/ou un élément capacitif pour stocker de l'énergie électrique,
c) un récepteur GPS,
d) un récepteur radio de signal horaire,
e) un capteur de température et/ou un capteur de luminosité,
f) un support de stockage doté d'un espace de stockage non effaçable ou uniquement lisible et/ou d'un espace de stockage, dans lequel des données peuvent être enregistrées de manière à pouvoir être effacées ou écrasées,
g) un moyen d'affichage.

9. Corps de tube (3) selon l'une quelconque des revendications 2 à 7, **caractérisé en ce que** le dispositif électronique (17) comprend deux éléments électriquement conducteurs, qui sont reliés l'un à l'autre par le biais d'une ligne de liaison électrique disposée sur le collet de tube (7) et pouvant être interrompue par un élément d'une protection d'inviolabilité.

10. Procédé de fabrication d'un corps de tube (3) selon la revendication 1, **caractérisé en ce qu'**un tuyau intérieur comprenant au moins une couche de matière plastique (19, 19a) est fabriqué, en
a) pliant un matériau plat, qui comprend au moins une couche en matière plastique (19, 19a) et reliant l'une à l'autre deux arêtes longitudinales dudit matériau plat le long d'une ligne de joint longitudinale (19), ou
b) extrudant une masse de matière thermoplastique,
**en ce qu'**un dispositif électronique (17) doté d'un accumulateur d'énergie pour fournir la tension de service nécessaire au fonctionnement est disposé sur la face extérieure dudit tuyau intérieur, **en ce qu'**un tuyau de gainage extérieur sans raccord est extrudé sur ledit tuyau intérieur doté du dispositif électronique (17), le dispositif électronique (17) étant incorporé de manière protégée entre le tuyau intérieur et le tuyau de gainage, et **en ce que** le tuyau complexe ainsi formé est tronçonné conformément à la longueur nécessaire du corps de tube (3) .
